(19) **Europäisches Patentamt**

**European Patent Office**

**Office européen des brevets**

(11) Veröffentlichungsnummer: **0 370 409**

**A1**

(12) # EUROPÄISCHE PATENTANMELDUNG

(21) Anmeldenummer: **89121322.5**

(22) Anmeldetag: **17.11.89**

(51) Int. Cl.⁵: **B09B 5/00**

(30) Priorität: **18.11.88 DE 3839093**
**20.10.89 DE 3935039**

(43) Veröffentlichungstag der Anmeldung:
**30.05.90 Patentblatt 90/22**

(84) Benannte Vertragsstaaten:
**AT BE CH DE ES FR GB GR IT LI LU NL SE**

(71) Anmelder: **Bauer Spezialtiefbau GmbH**
**Postfach 1260 Wittelsbacherstrasse 5**
**D-8898 Schrobenhausen(DE)**

(72) Erfinder: **Die Erfinder haben auf ihre**
**Nennung verzichtet**

(74) Vertreter: **Heim, Hans-Karl, Dipl.-Ing. et al**
**c/o Weber & Heim Hofbrunnstrasse 36**
**D-8000 München 71(DE)**

(54) **Verfahren zur Dekontamination von Böden.**

(57) In einem Verfahren zur Dekontamination von Böden, bei dem Wasser mit Mikroorganismen und Nährstoffen für die Mikroorganismen dem Boden zugeführt und kontaminiertes Wasser mit Abbauprodukten der Mikroorganismen vom Boden abgeführt wird, läßt sich eine gute Sauerstoff- und Nährstoffversorgung der Mikroorganismen dadurch erreichen, daß so wenig Wasser dem Boden zugeführt wird, daß dieser mit Wasser ungesättigt bleibt, und daß der Wasserzufuhr die Zu- und Abfuhr mindestens eines sauerstoffhaltigen Gases in die ungesättigte Bodenzone überlagert wird.

Fig. 2

Die Erfindung betrifft ein Verfahren zur Dekontamination von Böden, bei dem Wasser mit Mikroorganismen und Nährstoffen für Mikroorganismen dem Boden zugeführt und kontaminiertes Wasser mit Abbauprodukten der Mikroorganismen vom Boden abgeführt wird.

Aus der US-A 4 401 569 ist ein Verfahren der gattungsgemäßen Art bekannt. In dem dort beschriebenen Verfahren wird der kontaminierte Bodenbereich über Entwässerungsgräben oder -bohrungen entwässert. In einer Aufbereitungsanlage wird das kontaminierte Wasser von Kohlenwasserstoffen und Ablagerungen befreit, mit Nährstoffen und Sauerstoff versehen und dem Boden wieder zugeführt. Da das Wasser nur ein geringes physikalisches Lösungsvermögen für Gase hat, reicht die Anreicherung des Wassers mit Sauerstoff für eine gute Sauerstoffversorgung der Mikroorganismen und damit für einen aeroben Abbau der Kohlenwasserstoffe im gesamten kontaminierten Bereich nicht aus, oder eine Vielzahl von Wasserzu- und -abführungen sind notwendig, damit dem Boden an vielen Stellen sauerstoffangereichertes Wasser zugeführt wird, was wiederum mit grossen Kosten verbunden ist. So müßten dem kontaminierten Bereich zur Sanierung von 1 m³ Boden, der mit 25 kg Heizöl verseucht ist, ca. 6.000 m³ Wasser zugeführt werden.

Es ist **Aufgabe** der Erfindung, ein Verfahren der gattungsgemäßen Art anzugeben, das eine gute Versorgung der Mikroorganismen mit Nährstoffen und Sauerstoff gewährleistet.

Die Aufgabe wird bei einem Verfahren der gattungsgemäßen Art erfindungsgemäß dadurch gelöst, daß so wenig Wasser dem Boden zu geführt wird, daß dieser mit Wasser ungesättigt bleibt und daß der Wasserzufuhr die Zu- und Abfuhr mindestens eines sauerstoffhaltigen Gases in die ungesättigte Bodenzone überlagert wird.

Die Infiltrationsrate (eingebrachte Wassermenge pro Bodenfläche und Zeit) wird so gering gehalten, daß der Boden mir Wasser ungesättigt und dadurch gasdurchlässig bleibt. Daher kann im Boden eine Gasströmung erzeugt werden, die eine ausreichende Versorgung der Mikroorganismen mit Sauerstoff gewährleistet. Das Wasser, welches neben den unbeweglichen Schadstoffen in den Zwickeln der Porenräume des Bodens auf der Oberfläche von Körnern und ggf. in Klüften angetroffen wird, ist der Lebensraum für die Mikroorganismen. Aus dem vorbeiströmenden Gas diffundiert der Sauerstoff in das Wasser und gelangt so (in molekularer Form) zu den Mikroorganismen. Gleichzeitig wird mit der Wasserzufuhr ständig die notwendige Nährstoffkonzentration aufrechterhalten und es können adaptierte Mikroorganismen herangeführt werden und unerwünschte toxisch wirkende Abbauprodukte abgeführt werden. Da hierdurch die Mikroorganismen zum aeroben Abbau der Kohlenwasserstoffe (unter Einbeziehung der halogenierten Kohlenwasserstoffe) die idealen Lebensbedingungen vorfinden, wird das Wachstum und die Abbautätigkeit der Mikroorganismen erhöht.

Als Gas kann z.B. Luft verwendet werden. Diese hat einen Sauerstoffanteil von 23% und ist damit zur Gewährleistung einer Sauerstoffversorgung der Mikroorganismen in diesem Verfahren geeignet. Ist z.B. für die Versorgung eines größeren Bereichs ein höherer Sauerstoffbedarf notwendig, so kann die Luft mit Sauerstoff angereichert oder reiner Sauerstoff verwendet werden.

Das Gas wird in einer günstigen Anordnung über mehrere in den Boden eingebrachte Injektionsbohrungen und/oder Gaslanzen zu- und abgeführt. Um eine Injektionsbohrung oder Gaslanze entsteht so eine radiale Gasströmung, die die umliegenden Bodenbereiche mit Sauerstoff versorgt. Das Gas strömt dabei durch den Druckgradienten zwischen jeweils einer Gaszu- und Abfuhr von den Zuführungen zu den Abführungen. Wenn in dem kontaminierten Boden bereich die Injektionsbohrungen alternierend für die Zu- und Abfuhr des Gases angeordnet werden, entsteht eine im wesentlichen horizontal verlaufende Gasströmung im gesamten kontaminierten Bereich, wobei das Gas in dichtere oder undurchlässigere Bodenschichten von darüber oder darunter liegenden lockeren Bodenschichten eindringt. Es ist jedoch vorteilhaft, dichte Bereiche gezielt mit Sauerstoff zu versorgen, um einen verstärkten Abbau der Kohlenwasserstoffe an diesen Stellen zu erzielen. Dies kann beispielsweise durch den Einsatz von Gaslanzen mit in axialer Richtung der Lanze verstellbaren Gasaustritts- oder Gaseintritts-Öffnungen erreicht werden. Diese Öffnungen werden dann auf die Höhe der undurchlässigen Schicht im kontaminierten Bereich des Bodens eingestellt und bewirken eine stärkere Gasdurchsetzung dieser Schicht.

In einer vorteilhaften Weiterbildung der Erfindung wird der horizontalen Gasströmung eine im wesentlichen vertikale Wasserströmung überlagert. Dies kann z.B. durch anordnen von horizontalen Drainagerohren erreicht werden, aus denen das Wasser austritt und im wesentlichen vertikal in tiefere Bodenschichten einsickert. Auf diese Weise werden alle Bodenbereiche gleichmäßig mit Mikroorganismen, mit Nährstoffen für Mikroorganismen und mit Sauerstoff versorgt. Die Drainagerohre sind hierbei dicht unter der Geländeoberfläche oder unter einer eventuellen Bebauung anzuordnen. Der Abstand der Rohre muß den geologischen Verhältnissen und der Durchlässigkeit des Bodens angepaßt werden und ist so zu wählen, daß sämtliche kontaminierte Bodenbereiche von der Wasserströmung erfaßt werden.

Um die Kontaminierung des Grundwassers mit kontaminiertem Wasser zu vermeiden, wird das kontaminierte Wasser über in Grundwasser-Fließrichtung dem kontaminierten Bodenbereich nachgeordnete Entnahmebohrungen dem Bodenbereich und dem Grundwasser entnommen. Das entnommene, kontaminierte Wasser wird dann einer Aufbereitungsanlage zugeführt, in der die Abbauprodukte entfernt und neue Nährstoffe und/oder Mikroorganismen dem Wasser zugesetzt werden. Das aufbereitete Wasser wird dann über die Drainagerohre dem Boden wieder zugeführt. Hierdurch wird eine weit reichende Verunreinigung des Grundwassers vermieden und die ausgespülten Bakterien werden dem kontaminierten Boden wieder zugeführt.

Zur Beschleunigung des mikrobiologischen Abbaues der Kohlenwasserstoffe ist es vorteilhaft, durch eine Temperierung des Wassers und/oder Gases eine für die Lebensbedingungen der Mikroorganismen günstige Temperatur im Boden einzustellen. Die Temperatur und die Flüsse der zugeführten Wärmeträger Gas und/oder Wasser sind so zu regulieren, daß die beim Abbau der Kohlenwasserstoffe entstehende Reaktionswärme genutzt wird, um eine Bodentemperatur von 15° bis 30° einzustellen. Bei der Verwendung von Luft empfiehlt es sich daher, eine Sanierung in den Sommermonaten durchzuführen, da dann die verwendete Luft eine höhere ausgangstemperatur aufweist und Heizkosten für die aufheizung gespart werden.

Eine schnelle und effiziente Dekontamination des Bodens wird ermöglicht, wenn den in Anspruch 1 genannten Verfahrensschritten folgende Verfahrensschritte vorgeordnet werden:

Der Boden wird, sofern nicht naturgemäß gegeben, mit Wasser gesättigt. Der gesättigte Boden wird mit einer Suspension aus pulvrigem Adsorptionsmittel und flüssiger Phase durchströmt und dadurch das Adsorptionsmittel in den Boden eingebracht. Anschließend wird der Boden vom gesättigten in den ungesättigten Zustand überführt.

Durch den Eintrag der Adsorptionsmittel werden die an den Bodenkörnern haftenden und/oder im Porenwasser gelösten organischen Verunreinigungen an ein für Mikroorganismen zugängliches Adsorptionsmittel mit großer Oberfläche überführt. Der biologische Abbau der Schadstoffe wird nun dadurch aktiviert, daß der für den mikrobiellen Abbau notwendige Sauerstoff durch Einspeisung von Luft in den ungesättigten Boden transportiert wird und zusätzlich von der Geländeoberkante aus nährstoffhaltiges Wasser versickert wird. Hierdurch kann der Boden von Kohlenwasserstoffen oder anderen Heteroatomen enthaltenden organischen aliphatischen, aromatischen oder heterozyklischen Verbindungen gereinigt werden.

Der mikrobiologischen Sanierung eines mit Kohlenwasserstoffen kontaminierten körnigen oder auch geklüfteten Untergrundes geht häufig eine 'hydraulische Sanierung' voraus. Die ungesättigten Bodenbereiche werden dabei über Brunnen geflutet, und mit einer Wasserspülung werden die beweglichen Kohlenwasserstoffe aus dem Untergrund entfernt. Zurück bleibt ein Rest unbeweglicher Kohlenwasserstoffe.

Die Restsättigung kann in Abhängigkeit von der Porengeometrie und der Durchlässigkeit des Bodens ca. 5 bis 15% des Porenvolumens betragen. Im geklüfteten Boden kann die Restsättigung in Abhängigkeit von Kluftvolumen und den Kluftbreiten lokal kleiner oder größer ausfallen.

Die Zugabe des Adsorptionsmittels mit sehr hoher Oberfläche kann vorteilhafterweise nach oder während der hydraulischen Sanierung durch Wasserspülung oder Injizierung in den Boden erfolgen.

Während der hydraulischen Sanierung kann das Spülwasser temperiert werden, um so die Temperatur des Bodens zu erhöhen und damit die Lebensbedingungen der Mikroorganismen zu verbessern.

Die Abbaurate des mikrobiologischen Abbaues von Kohlenwasserstoffen und ähnlichen Verunreinigungen und damit der Zeitaufwand und der Erfolg einer Sanierung sind zum einen von der Verteilung, der Art und "Bioverfügbarkeit" der Schadstoffe und dem Vorhandensein von adaptierten Mikroorganismen und zum anderen vom Sauerstoff- und Nährstoffangebot und weiterer Milieufaktoren (Temperatur, pH-Werte Redox-Potential) für die Mikroorganismen abhängig.

Durch den Eintrag eines feinpulverigen Adsorptionsmittels, z.B. hochporöser Aktivkohle, wird die "Bioverfügbarkeit" der Schadstoffe erhöht, die bisher zu den primären Parametern zählte, die für einen langsameren Abbau der Verunreinigungen verantwortlich sind. Die "Bioverfügbarkeit" der Schadstoffe wurde im wesentlichen durch die kleine Oberfläche der Bodenkörner, an denen die Schadstoffe haften. beeinflußt. Weitere Parameter sind die Wasserlöslichkeit der organischen Verunreinigungen und die Fähigkeit von Mikroorganismen. Schadstoffe vor der Aufnahme in die Zelle zu emulgieren.

Durch das Einbringen der Aktivkohle mit einer hohen spezifischen Oberfläche werden die an den Bodenkörnern haftenden und im Porenwasser gelösten organischen Verunreinigungen an das Adsorptionsmittel überführt, wodurch diese Verunreinigungen für die abbauenden Mikroorganismen und die Versorgung mit Sauerstoff und Nährstoffen gut zugänglich sind. Durch den Eintrag von katalytisch wirkenden Spurenelementen kann die Abbautätigkeit dabei weiterhin gesteigert werden. Zum Eintrag der Adsorptionsmittel und der katalytisch wirkenden Spurenelemente in den kontaminierten Boden wird dieser vorübergehend ge flutet, sofern er noch nicht gesättigt war, und anschließend wird das Adsorptionsmittel und eventuell auch die katalytisch wirkenden Spurenelemente zusammen mit Wasser oder einer anderen Flüssigkeit in den gesättigten Boden eingebracht.

In Abhängigkeit vom Schichtaufbau, der Durchlässigkeit der einzelnen Bodenschichten und/oder -linsen und der Körnung der verwendeten Adsorptionsmittel kann dies durch Einspülen über Versikkerungsbohrungen oder durch Injizieren über vertikal oder horizontal angeordnete Lanzen erfolgen. Undurchlässige Bodenschichten können zum Zwecke einer besseren Durchsetzung mit dem Adsorptionsmittel vorher gecrackt werden. Nach dem Eintrag der Adsorptionsmittel wird der Grundwasserspiegel im kontaminierten Bodenbereich wieder abgesenkt, wodurch der Boden in den ungesättigten Zustand überführt wird.

Nun wird der Boden, wie bereits beschrieben, durch Zufuhr von Wasser mit Nährstoffen und eventuell katalytisch wirkenden Spurenelementen und durch die Zufuhr mindestens eines sauerstoffhaltigen Gases weiterbehandelt.

Als Adsorptionsmittel können Aktivkohle, Harz oder Kunststoffe, polare Eisen-, Aluminium- oder Siliziumoxide oder auch Zellulose verwendet werden.

Das Fluten und Entwässern des Bodens läßt sich auf einfache Weise durchführen, wenn der kontaminierte Bodenbereich vor der Dekontamination mit einer undurchlässigen Wand (z.B. Schmalwand) umgeben wird.

Das bei der Dekontamination anfallende Prozeßwasser kann in einer Aufbereitungsanlage wieder aufbereitet und dem Verfahren wieder zugeführt werden. In dem Aufbereitungsverfahren sind sowohl reaktive Verfahren wie Oxidation und/oder UV-Bestrahlung als auch sorptive Verfahren, wie Flockungsprozesse und Anlagerung an organische Harze oder Aktivkohle vorgesehen. Insbesondere die reaktiven Verfahren sollen eine weitere Umwandlung der in den Untergrund zurückgeleiteten Schadstoffe zu polaren, sauerstoffreichen und damit auch biologisch besser verwertbaren Stoffen bewirken.

Undurchlässige Schichten des Bodens können insbesondere durch hydraulisches Cracken aufgebrochen und besser mit Adsorptionsmittel versetzt werden. Der Eintrag des Adsorptionsmittels in den Boden kann hierbei sogar beim Cracken erfolgen.

Vorteilhafte Weiterbildungen der Erfindung sind Gegenstand der Unteransprüche.

Die Erfindung wird nachfolgend anhand eines in der Zeichnung schematisch dargestellten Ausführungsbeispiels beschrieben. Es zeigen:

Fig. 1 eine Aufsicht auf die Oberfläche eines kontaminierten Bodenbereichs mit Zu- und Abführungen für Wasser und Luft;

Fig. 2 einen vertikalen Schnitt II-II aus Fig. 1 und

Fig. 3 einen zum vertikalen Schnitt aus Fig. 2 senkrechten vertikalen Schnitt III-III aus Fig. 1.

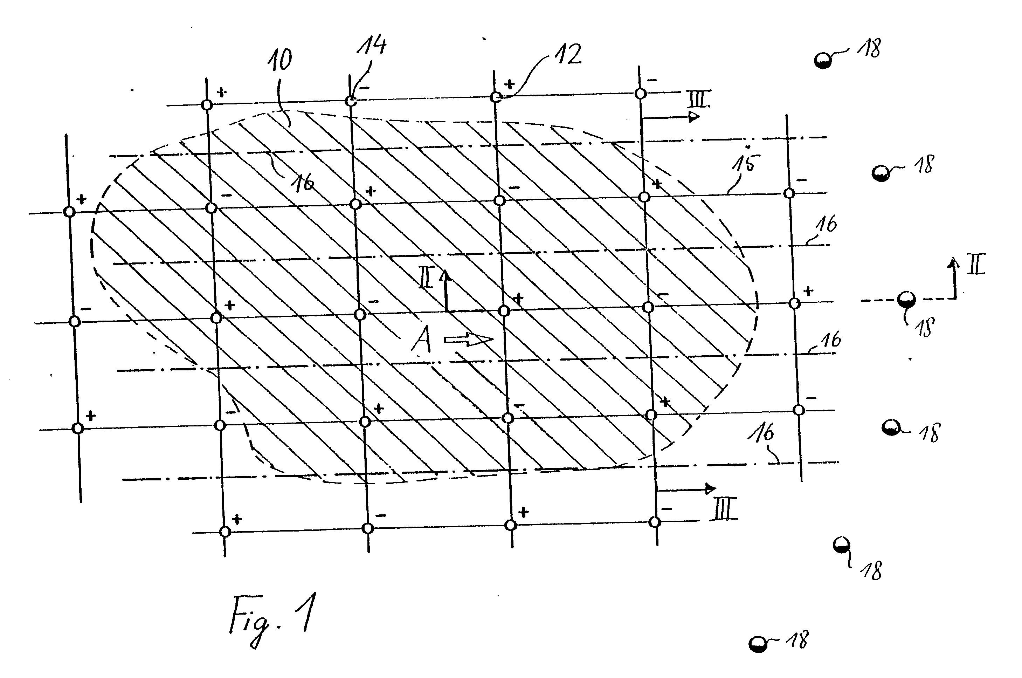

Fig. 1 zeigt den Grundriß eines schraffiert dargestellten kontaminierten Bodenbereichs 10. In diesem Bereich 10 sind Gaslanzen 12 für eine Luftzufuhr und Gaslanzen 14 für eine Luftabfuhr vertikal in den Boden z.B. durch Bohren oder Rütteln eingetrieben. Die Lanzen 12 für die Luftzufuhr sind mit einem +, die Lanzen 14 für die Luftabfuhr mit einem - gekennzeichnet, wobei beide über Versorgungseinrichtungen z.B. Versorgungsleitungen 15 miteinander verbunden und alternierend in der Art eines Schachbrettmusters angeordnet sind. Durch den Druckgradienten zwischen den Luftzuführungen 12 und den Luftabführungen 14 wird in nachfolgend noch näher beschriebener Weise eine horizontale Luftströmung erzeugt.

In dem kontaminierten Bereich 10 sind horizontal gerichtete Drainagerohre 16 parallel zueinander angeordnet, um den Bereich 10 gleichmäßig mit Wasser zu versorgen. Dieses Wasser ist mit Mikroorganismen versehen, die für einen aeroben biologischen Abbau der den Bereich 10 kontaminierenden Kohlenwasserstoffe adaptiert sind. Das Wasser kann alternativ oder zusätzlich zu den Mikroorganismen Nährstoffe für Mikroorganismen enthalten. Das Anreichern des Wassers mit Sauerstoff für die Mikroorganismen ist nicht notwendig, da der Sauerstoff über die Lanzen 12 dem Boden zugeführt wird.

In Grundwasser-Fließrichtung A sind dem Bereich 10 mehrere als Entnahmebrunnen ausgebildete Entnahmebohrungen 18 nachgeordnet. Diese Entnahmebrunnen 18 sind in einer im wesentlichen quer zur Grundwasser-Fließrichtung A gerichteten Reihe nebeneinander angeordnet, um eine Entnahme möglichst allen Wassers zu gewährleisten, das den kontaminierten Bereich 10 durchlaufen hat.

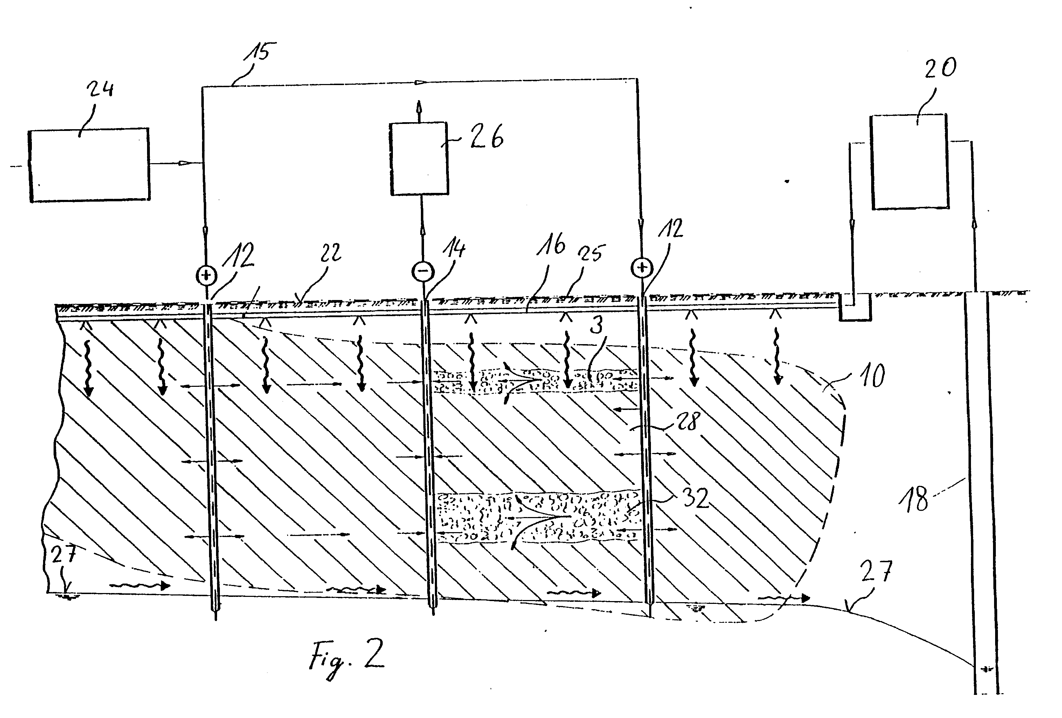

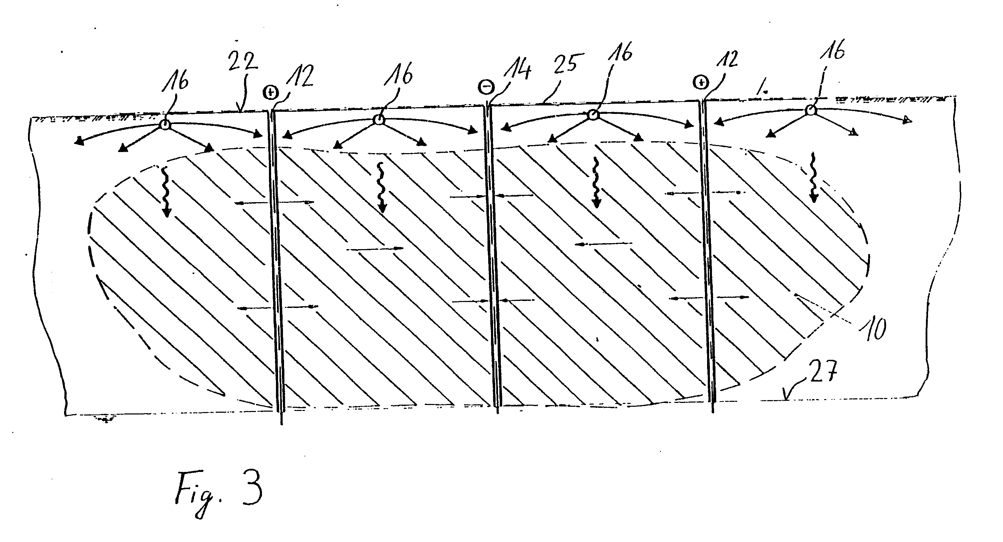

Wie in Fig. 2 zu sehen ist, wird der Grundwasserspiegel 27 im Bereich der Entnahmebrunnen 18 abgesenkt. Das aus den Entnahmebrunnen 18 abgepumpte Wasser wird einer Wasseraufbereitungsanlage 20 zugeführt, in der es von Abbauprodukten der Mikroorganismen gereinigt und mit neuen Mikroorganismen und/oder Nährstoffen für diese versehen wird. Das aufbereitete Wasser wird dann wieder den Drainagerohren 16 zugeführt. Hierdurch wird ein beachtlicher Teil des in dem Verfahren verwendeten Wassers wiederverwendet, wodurch die Belastung umliegender Bodenbereiche stark verringert wird. Das Wasser tritt, wie in Fig. 3 dargestellt, aus den einander zugewandten Seiten der Drainagerohre 16 aus, wodurch auch der Bereich zwischen zwei Drainagerohren 16 gleichmäßig bewässert wird. Die Drainagerohre 16 sind dicht unter der Bodenoberfläche 22 angeordnet, wodurch das Wasser alle darunter befindlichen kontaminierten Bodenschichten im wesentlichen vertikal durchströmt (gewellte Pfeile).

Wie in Fig. 2 dargestellt, sind die Lanzen 12 für die Luftzufuhr über die Versorgungsleitungen 15 an einen Gaskompressor 24 mit einer Heizvorrichtung angeschlossen. Der Gaskompressor 24 erzeugt in den Lanzen 12 einen Überdruck, wodurch die Luft aus diesen Lanzen radial in die umliegende Bodenbereiche strömt. Zur Erzeugung von für die Mikroorganismen günstigen Temperaturbedingungen im kontaminierten Bodenbereich 10 ist der Gaskompressor mit einer Heizvorrichtung für die Druckluft versehen um den Boden über die Luftzufuhr aufzuheizen. Die Lanze 14 für die Luftabfuhr ist an einen Gasfilter 26 angeschlossen, um die Abgabe von freigesetzten Kohlenwasserstoffen an die Umgebung zu verhindern. Hierfür ist die Bodenoberfläche 22 über dem kontaminierten Bereich 10 außerdem mit einer Abdeckfolie 25 abgedeckt. Die Lanzen 12, 14 ragen vertikal bis unter den Grundwasserspiegel 27 und durchsetzen den kontaminierten Bereich 10 in seiner vertikalen Ausdehnung vollständig. Zwischen den Lanzen 12 und der Lanze 14 wird in homogenen Bodenbereichen durch den zwischen den Lanzen 12 und 14 auftretenden Druckgradienten eine horizontale Luftströmung aufgebaut (grade Pfeile). Bei sehr dichten oder stark kontaminierten Bodenschichten 28 er folgt die Luftzufuhr nicht nur durch die Lanzen 12 sondern auch durch die darüberliegenden und darunterliegenden lockeren Bodenschichten 30,32 (gebogene Pfeile).

Durch die vertikale Wasserströmung mit den Nährstoffen für die Mikroorganismen und die überlagerte horizontale Luftströmung mit Sauerstoff für die Mikroorganismen und die Temperierung des Bodens durch das zugeführte Wasser und die zugeführte Luft werden für die zum aeroben Abbau von Kohlenwasserstoffen adaptierten Mikroorganismen ideale Lebensbedingungen geschaffen. Bei dem Verfahren werden nicht nur neue Mikroorganismen mit dem Wasser dem Boden zugeführt, sondern auch die im Boden natürlich vorkommenden Mikroorganismen werden zum Abbau der Kohlenwasserstoffe angeregt. Dies führt zu einem schnellen Abbau der in dem kontaminierten Bereich 10 vorhandenen Kohlenwasserstoffe.

## Ansprüche

1. Verfahren zur Dekontamination von Böden, bei dem Wasser mit Mikroorganismen und Nährstoffen für Mikroorganismen dem Boden zugeführt und kontaminiertes Wasser mit Abbauprodukten der Mikroorganismen vom Boden abgeführt wird, dadurch **gekennzeichnet,**

daß so wenig Wasser dem Boden zugeführt wird, daß dieser mit Wasser ungesättigt bleibt, und daß der Wasserzufuhr die Zu- und Abfuhr mindestens eines sauerstoffhaltigen Gases in die ungesättigte Bodenzone überlagert wird.

2. Verfahren nach Anspruch 1, dadurch **gekennzeichnet,** daß in dem kontaminierten Boden (10) eine im wesentlichen horizontale Gasströmung erzeugt wird, die einer im wesentlichen vertikalen Wasserströmung überlagert wird.

3. Verfahren nach Anspruch 1 oder 2, dadurch **gekennzeichnet,** daß durch eine Temperierung des Wassers und/oder Gases eine für die Lebensbedingungen der Mikroorganismen günstige Temperatur im Boden eingestellt wird.

4. Verfahren nach einem der vorhergehenden Ansprüche, dadurch **gekennzeichnet,** daß der kontaminierte Boden gasdicht abgedeckt wird.

5. Verfahren nach einem der vorhergehenden Ansprüche, dadurch **gekennzeichnet,** daß das Gas durch im wesentlichen vertikal gerichtete Injektionsbohrungen und/oder Gaslanzen dem Boden zugeführt und von dem Boden abgeführt wird.

6. Verfahren nach Anspruch 5, dadurch **gekennzeichnet,** daß die Injektionsbohrungen und/oder Gaslanzen in dem Boden alternierend für die Zufuhr und die Abfuhr des Gases angeordnet werden.

7. Verfahren nach einem der vorhergehenden Ansprüche, dadurch **gekennzeichnet,** daß das Wasser dem kontaminierten Boden (10) über im wesentlichen horizontal verlaufende Drainagerohre (16) zugeführt wird.

8. Verfahren nach einem der vorhergehenden Ansprüche, dadurch **gekennzeichnet,** daß kontaminiertes Wasser über in Grundwasser-Fließrichtung (A) dem kontaminierten Bodenbereich (10) nachgeordnete Entnahmebohrungen (18) dem Bodenbereich (10) und dem Grundwasser entnommen wird.

9. Verfahren nach Anspruch 8, dadurch **gekennzeichnet,** daß das entnommene Wasser in einer Aufbereitungsanlage (20) von Abbauprodukten gereinigt und nach Zugabe von Nährstoffen und/oder Mikroorganismen dem Boden wieder zugeführt wird.

10. Verfahren nach einem der vorhergehenden Ansprüche, dadurch **gekennzeichnet,** daß das Gas stark kontaminierten oder dichten Bodenbereichen (28) gezielt zugeführt wird.

11. Verfahren nach einem der vorhergehenden Ansprüche,
dadurch **gekennzeichnet,**
daß dem Boden Luft oder Sauerstoff oder ein Gemisch von beiden zugeführt wird.

12. Verfahren nach einem der vorhergehenden Ansprüche, **gekennzeichnet** durch folgende Verfahrensschritte, die vor den in Anspruch 1 genannten Verfahrensschritten durchgeführt werden:
Ein noch nicht mit Wasser gesättigter Boden wird gesättigt, in den gesättigten Boden wird eine Suspension aus pulvrigem Adsorptionsmittel und flüssiger Phase eingebracht, und
der Boden wird anschließend von dem gesättigten in den ungesättigten Zustand überführt.

13. Verfahren nach Anspruch 12,
dadurch **gekennzeichnet,**
daß das Adsorptionsmittel durch Wasserspülung in den Boden eingebracht wird.

14. Verfahren nach Anspruch 12,
dadurch **gekennzeichnet,**
daß das Adsorptionsmittel in den Boden injiziert wird.

15. Verfahren nach einem der Ansprüche 12 bis 14,
dadurch **gekennzeichnet,**
daß undurchlässige Bodenschichten vor Eindringen des Adsorptionsmittels mechanisch aufgebrochen (gecrackt) werden.

16. Verfahren nach einem der Ansprüche 12 bis 15,
dadurch **gekennzeichnet,**
daß als Adsorptionsmittel unpolare Aktivkohle, Harze oder Kunststoffe verwendet werden.

17. Verfahren nach einem der Ansprüche 12 bis 16,
dadurch **gekennzeichnet,**
daß als Adsorptionsmittel polare Eisen-, Aluminium oder Siliciumoxide verwendet werden.

18. Verfahren nach einem der Ansprüche 12 bis 17,
dadurch **gekennzeichnet,**
daß als Adsorptionsmittel Zellulose verwendet wird.

19. Verfahren nach einem der Ansprüche 12 bis 18,
dadurch **gekennzeichnet,**
daß mit den Nährstoffen katalytisch wirkende Spurenelemente in den ungesättigten Boden eingebracht werden.

20. Verfahren nach einem der Ansprüche 12 bis 19,
dadurch **gekennzeichnet,**
daß die Überführung des Bodens in den ungesättigten Zustand durch Absenkung des Grundwasserspiegels erfolgt.

21. Verfahren nach Anspruch 20,
dadurch **gekennzeichnet,**
daß der kontaminierte Boden von einer undurchlässigen Wand umgeben wird.

22. Verfahren nach Anspruch 13 und einem der Ansprüche 14 bis 21,
dadurch **gekennzeichnet,**
daß das Spülwasser temperiert und dadurch die Bodentemperatur erhöht wird.

Fig. 1

Fig. 2

Fig. 3

EP 0 370 409 A1

# EUROPÄISCHER RECHERCHENBERICHT

| Europäisches Patentamt | **EUROPÄISCHER RECHERCHENBERICHT** | Nummer der Anmeldung |
|---|---|---|
| | | EP 89 12 1322 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | US-A-4 401 569 (JHAVERI et al.)<br>* Spalte 2, Zeilen 9-27; Spalte 3, Zeile 43 - Spalte 5, Zeile 55; Abbildungen * & EP-A-0 066 898<br>--- | 1,3,5,8 ,9,11, 22 | B 09 B 5/00 |
| A | DE-C-3 811 714 (IN DER SCHMITTEN)<br>* Spalte 2, Zeilen 44-68; Spalte 6, Zeile 29 - Spalte 8, Zeile 29; Abbildungen *<br>--- | 1,5,8-11,20 | |
| A | DE-A-3 601 979 (LFU-LABOR FÜR UMWELTANALYTIK GmbH)<br>* Insgesamt *<br>--- | 1,5,11, 19 | |
| A | EP-A-0 170 862 (RUHRKOHLE AG)<br>* Seite 6, Zeilen 12-20; Seite 7, Zeilen 12-16; Seite 10, Zeile 7 - Seite 11, Zeile 2; Seite 12, Zeile 30 - Seite 14, Zeile 18; Abbildungen *<br>--- | 1,3,5,9 -11,22 | |
| A | DE-A-3 525 701 (DIDIER-WERKE AG)<br>* Spalte 2, Zeile 29 - Spalte 6, Zeile 40; Abbildung *<br>--- | 1,2,4,5 ,7,9,11 -14,21 | RECHERCHIERTE SACHGEBIETE (Int. Cl.5)<br><br>B 09 B |
| A | EP-A-0 255 354 (INTERNATIONAL TECHNOLOGY CORP.)<br>* Seite 2, Zeile 58 - Seite 3, Zeile 15; Seite 4, Zeile 10 - Seite 5, Zeile 44; Abbildungen *<br>--- | 1,4,11, 21 | |
| A | EP-A-0 275 096 (HÖLSCHER)<br>* Spalte 5, Zeile 57 - Spalte 7, Zeile 6; Abbildungen *<br>---       -/- | 1-3,5,7 ,9,11, 21,23 | |

Der vorliegende Recherchenbericht wurde für alle Patentansprüche erstellt

| Recherchenort | Abschlußdatum der Recherche | Prüfer |
|---|---|---|
| DEN HAAG | 19-02-1990 | VAN DER ZEE W.T. |

EPO FORM 1503 03.82 (P0403)

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | PATENT ABSTRACTS OF JAPAN, Band 10, Nr. 303 (C-378)[2359], 16. Oktober 1986; & JP-A-61 118 181 (TAKENAKA KOMUTEN CO. LTD) 05-06-1986 ----- | 16 | |

RECHERCHIERTE SACHGEBIETE (Int. Cl.5)

Der vorliegende Recherchenbericht wurde für alle Patentansprüche erstellt

| Recherchenort | Abschlußdatum der Recherche | Prüfer |
|---|---|---|
| DEN HAAG | 19-02-1990 | VAN DER ZEE W.T. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)